# EUROPEAN PATENT APPLICATION

(11) **EP 4 503 848 A1**
(43) Date of publication of application: **05.02.2025**
(21) Application number: 23778985.4
(22) Date of filing: 16.02.2023
(51) Int. Cl.: H05B 3/20, C09J 7/30, C09J 201/04, H05B 3/34

(54) **SHEET-SHAPED HEATER**

(30) Priority: 30.03.2022 JP 2022056330
(71) Applicant: Tomoegawa Corporation, Tokyo 104-8335 (JP)
(72) Inventor: GOTO, Makoto, Shizuoka-shi, Shizuoka 421-0192 (JP); KURAHARA, Taku, Shizuoka-shi, Shizuoka 421-0192 (JP); FUKASAWA, Takumi, Shizuoka-shi, Shizuoka 421-0192 (JP); SUGAWARA, Yosuke, Shizuoka-shi, Shizuoka 421-0192 (JP)
(74) Representative: TBK
(86) International application number: PCT/JP2023/005505
(87) International publication number: WO 2023/188955

(57) **Abstract**

The present invention addresses the problem of providing a highly insulative sheet-shaped heater that is capable of reducing the tensile (stretching) stress load when disposed on a curved surface of a body to be heated that has a curved surface, such as a pipe. This problem is solved by a sheet-shaped heater wherein: a high-strength highly insulative sheet obtained by impregnating reinforcing fibers with a fluororesin, a first adhesive layer, a first insulating layer, a second adhesive layer, and a heat-emitting layer are layered in the given order; main surfaces of the high-strength highly insulative sheet and the first adhesive layer, respectively, are closely adhered to each other; main surfaces of the first adhesive layer and the first insulating layer, respectively, are closely adhered to each other; main surfaces of the second adhesive layer and the heat-emitting layer, respectively, are closely adhered to each other; and the ratio (h₁/Hₜₒₜₐₗ) of the thickness (h₁) of the first insulating layer with respect to the total thickness (Hₜₒₜₐₗ) of the high-strength highly insulative sheet, the first adhesive layer, and the first insulating layer is 0.10 or greater.

## Description

### TECHNICAL FIELD

The present invention relates to a sheet-shaped heater.

### BACKGROUND ART

Heaters described in, for example, Patent Documents 1 to 4 have heretofore been proposed as those for heating pipes and the like.

Patent Document 1 describes a planar heater including: a sheet-shaped heating element in which a lead is connected to a terminal portion connected to a conductive heating element; and a resin layer with low thermal expansion properties which has a coefficient of thermal expansion of 8 × 10⁻⁵°C or less being provided on the whole surface of at least one side of the conductive heating element or on the whole surface of at least one side of the sheet-shaped heating element including the conductive heating element and the terminal portion, the resin layer being sandwiched from its both sides between and heat-fused with mutually heat-fusible fluororesin layers A, heat diffusion material layers being further provided on surfaces of the heat-fusible fluororesin layers A on both sides, respectively, and other heat-fusible fluororesin layers B being further provided on surfaces of the heat diffusion material layers, respectively. According to such a planar heater of the invention having the heat diffusion material layers, even if the conductive heating element is extremely thin, deformation force of resin due to shrinkage is suppressed by the heat diffusion material layers pressure-bonded to the resin in the heat fusion step of the resin under heating during the manufacture, and is therefore not transmitted to the conductive heating element itself. Accordingly, the planar heater does not have wavy deformation or warpage and the planar heater that can be obtained has an exactly planar shape. It is described that a fixed stable shape can be therefore obtained, and the planar heater can be certainly and completely immersed in a liquid to be heated even when it is immersed therein.

Patent Document 2 describes a planar heating element obtained by laminating insulating outer coatings through hot melt adhesive layers on both sides of a metal resistor having a heating circuit formed therein, and integrating them together, hot melt fluororesin being used for the hot melt adhesive layers and glass cloth impregnated with polytetrafluoroethylene (hereinafter referred to as PTFE) and sintered being used for the insulating outer coatings. It is described that, according to such a planar heating element, the planar heating element that can be obtained has heat resistance having a continuous use temperature of 200°C or more by interposing PFA films or FEP films between the PTFE-impregnated glass cloth layers as the hot melt adhesive layers to sandwich the metal resistor therebetween, and heat-fusing them together under heat and pressure, and it does not cause warpage or other deformation under temperature increases or decreases because of the use of the PTFE-impregnated glass cloth for the insulating outer coatings, and is also high in mechanical strength.

Patent Document 3 describes a planar heater including: a heat generating layer; and first fluororubber layers respectively provided on its both surfaces, the first fluororubber layers having a type A durometer hardness according to JIS K 6253 of 65 or less. It is described that, according to such a planar heater, the planar heater that can be provided has a heat generating layer coated with fluororubber layers and has improved heat conduction efficiency.

Patent Document 4 describes a fluororubber planar heater including: a heater element; and a fluororubber sheet adhered to the heater element, wherein the fluororubber sheet including glass cloth, and fluororubber layers with which the glass cloth is impregnated through an adhesion enhancer has the glass cloth and the fluororubber layers with which the glass cloth is impregnated through the adhesion enhancer. It is described that such a fluororubber planar heater is excellent in heat resistance, cold resistance, acid resistance, oil resistance and solvent resistance, and is also excellent in flexing properties and impact resistance because it is made of elastic rubber.

### CITATION LIST

### PATENT DOCUMENTS

Patent Document 1: JP 2016-110757 A
Patent Document 2: JP 4-66087 U
Patent Document 3: JP 2015-122212 A
Patent Document 4: JP 2007-224208 A

### SUMMARY OF THE INVENTION

### PROBLEM TO BE SOLVED BY THE INVENTION

In a case where a member to be heated has a curved surface as in a pipe, when a sheet-shaped heater is disposed on the curved surface, a tensile (elongation) stress load is applied to the outer peripheral side of the sheet-shaped heater. The present invention provides a sheet-shaped heater which is capable of reducing a tensile (elongation) stress load in a case where the sheet-shaped heater is disposed on a curved surface of a member to be heated having the curved surface (e.g., a pipe), and which additionally has high insulation properties.

### MEANS FOR SOLVING THE PROBLEM

The inventors have made an intensive study to solve the problem described above and completed the present invention.

The present invention provides the following (1) and (6).
(1) A sheet-shaped heater including:
   a high-strength/high-insulation sheet obtained by impregnating reinforced fibers with fluororesin;
   a first adhesive layer;
   a first insulating layer;
   a second adhesive layer; and
   a heat generating layer, these layers being laminated in this order,
      wherein:
      a main surface of the high-strength/high-insulation sheet and a main surface of the first adhesive layer are closely attached to each other,
      a main surface of the first adhesive layer and a main surface of the first insulating layer are closely attached to each other,
      a main surface of the second adhesive layer and a main surface of the heat generating layer are closely attached to each other, and
      a ratio (h₁/Hₜₒₜₐₗ) of a thickness (h₁) of the first insulating layer to a total thickness (Hₜₒₜₐₗ) of the high-strength/high-insulation sheet, the first adhesive layer and the first insulating layer is 0.10 or more.
(2) The sheet-shaped heater according to (1) above, wherein the total thickness is 200 to 800 um.
(3) The sheet-shaped heater according to (1) or (2) above, wherein:
   the high-strength/high-insulation sheet has a thickness of 100 to 300 um, and
   the first adhesive layer has a thickness of 5 to 50 um.
(4) The sheet-shaped heater according to any one of (1) to (3) above, wherein the heat generating layer is made of a metal fiber sheet.
(5) The sheet-shaped heater according to any one of (1) to (4) above, wherein:
   the first adhesive layer and/or the second adhesive layer is made of a fluorine adhesive in which a ratio of storage modulus at 70°C (E₂) to storage modulus at 25°C (E₁) (percentage: E₂/E₁ × 100) is 8 to 92%.
(6) The sheet-shaped heater according to any one of (1) to (5) above, wherein:
   the first adhesive layer is made of a fluorine adhesive having a solubility of 5 to 30 mass%, the solubility being obtained by performing a solvent solubility test which includes: putting 1,000 g of tetrahydrofuran (THF) into a 2 L plastic bottle, adjusting its temperature to 23°C, putting 1 to 50 g of a granular sample with a diameter of 0.5 to 2.0 cm into the tetrahydrofuran being stirred at 600 rpm by a medium viscosity agitator using a Disper blade with a blade diameter of 40 mm as a stirrer blade, checking whether a total amount of the sample is dissolved after passage of 24 hours, additionally putting 1 to 50 g of the sample again if it is dissolved, and repeating a process for checking whether it is dissolved after the passage of 24 hours, thereby determining a maximum soluble amount (solubility).

### EFFECT OF THE INVENTION

The present invention can provide a sheet-shaped heater which is capable of reducing a tensile (elongation) stress load in a case where the sheet-shaped heater is disposed on a curved surface of a member to be heated having the curved surface (e.g., a pipe), and which additionally has high insulation properties.

### BRIEF DESCRIPTION OF THE DRAWINGS

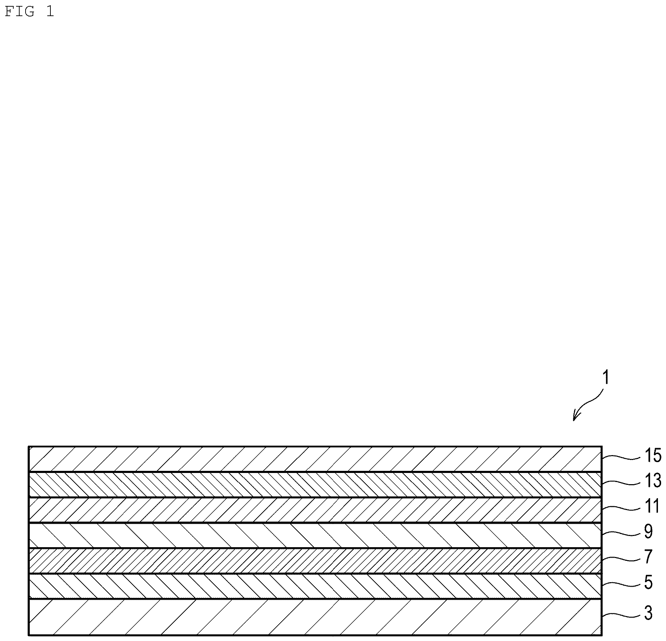

[FIG. 1] FIG. 1 is a cross-sectional view (schematic cross-sectional view) seen when a heater according to a preferred embodiment of the invention is cut in a direction perpendicular to its main surface.

### DESCRIPTION OF EMBODIMENTS

The present invention will be described.

The present invention provides a sheet-shaped heater including: a high-strength/high-insulation sheet obtained by impregnating reinforced fibers with fluororesin; a first adhesive layer; a first insulating layer; a second adhesive layer; and a heat generating layer, these layers being laminated in this order, wherein: a main surface of the high-strength/high-insulation sheet and a main surface of the first adhesive layer are closely attached to each other, a main surface of the first adhesive layer and a main surface of the first insulating layer are closely attached to each other, a main surface of the second adhesive layer and a main surface of the heat generating layer are closely attached to each other, and a ratio (h₁/Hₜₒₜₐₗ) of a thickness (h₁) of the first insulating layer to a total thickness (Hₜₒₜₐₗ) of the high-strength/high-insulation sheet, the first adhesive layer and the first insulating layer is 0.10 or more.

The sheet-shaped heater as described above is hereinafter referred to also as the "heater of the invention."

The heater of the invention will be described with reference to a drawing showing its preferred embodiment.

FIG. 1 shows a cross-section seen when the preferred embodiment of the heater of the invention is cut in a direction perpendicular to its main surface. Since FIG. 1 is a schematic cross-sectional view, the respective dimensions in FIG. 1 may be different from actual ones.

A heater 1 of the invention shown in FIG. 1 includes a high-strength/high-insulation sheet 3, a first adhesive layer 5, a first insulating layer 7, a second adhesive layer 9, a heat generating layer 11, a third adhesive layer 13, and a second insulating layer 15 which are laminated in this order, and main surfaces of the respective adjoining layers are closely attached to each other. That is, in the heater of the invention, it is not essential for the main surfaces of the first insulating layer 7 and the second adhesive layer 9 to be closely attached to each other but another layer may be contained between these layers. In the preferred embodiment shown in FIG. 1, however, the main surfaces of the first insulating layer 7 and the second adhesive layer 9 are closely attached to each other. Likewise, in the heater of the invention, the main surfaces of the heat generating layer 11, the third adhesive layer 13, and the second insulating layer 15 may not be closely attached to each other. In the preferred embodiment shown in FIG. 1, however, these layers are closely attached to each other.

The heater of the invention may not have the third adhesive layer and the second insulating layer. However, the heater preferably has these layers as in the preferred embodiment shown in FIG. 1.

### <High-strength/High-insulation Sheet>

The high-strength/high-insulation sheet 3 is a sheet obtained by impregnating reinforced fibers with fluororesin and has high strength and high insulation properties.

The reinforced fibers as used herein are fibers having high strength and may be conventionally known reinforced fibers. Examples of the material of the reinforced fibers include glass, aramid (aromatic polyamide resin), and carbon fiber.

The reinforced fibers preferably have a cross-sectional diameter (equal-area circle equivalent diameter) of about 5 to 10 um.

The reinforced fibers are preferably flat-woven into a sheet shape. That is, the reinforced fibers are preferably of a woven fabric type.

The high-strength/high-insulation sheet 3 is a sheet obtained by impregnating the above-mentioned reinforced fibers with fluororesin.

The fluororesin is not particularly limited and examples thereof include polytetrafluoroethylene (PTFE), vinylidene fluoride-hexafluoropropylene copolymer, and vinylidene fluoride-tetrafluoroethylene-hexafluoropropylene copolymer.

The reinforced fibers may be impregnated with the fluororesin after applying a primer to the reinforced fibers.

The high-strength/high-insulation sheet 3 is preferably a sheet obtained by impregnating glass fiber woven fabric, specifically glass cloth with PTFE.

The thickness of the high-strength/high-insulation sheet is not limited and is preferably 100 to 300 um, and more preferably 125 to 200 um.

The thickness of the high-strength/high-insulation sheet is represented by a value obtained by the following measurement:
A magnified photo (200X) of a cross-section as shown in FIG. 1 in a direction perpendicular to the main surface of the heater of the invention is obtained; then, the thickness of the high-strength/high-insulation sheet is measured at arbitrarily selected 100 points on the magnified photo; the simple average value is determined; then, the average value obtained is taken as the thickness of the layer.

Values obtained by measurement using the same method are taken as the thicknesses of the other layers to be described later (first adhesive layer 5, first insulting layer 7, second adhesive layer 9, heat generating layer 11, third adhesive layer 13, second insulating layer 15 and the other layers).

### <First Adhesive Layer, Second Adhesive Layer, Third Adhesive Layer>

The first adhesive layer 5, the second adhesive layer 9, and the third adhesive layer 13 will be described.

These may be of the same type or different types.

The main surfaces of the first adhesive layer 5 are closely attached to the main surface of the high-strength/high-insulation sheet 3 and the main surface of the first insulating layer 7, respectively.

The main surfaces of the second adhesive layer 9 are closely attached to the main surface of the first insulating layer 7 and the main surface of the heat generating layer 11, respectively.

The main surfaces of the third adhesive layer 13 are closely attached to the main surface of the heat generating layer 11 and the main surface of the second insulating layer 15, respectively.

Each of the first adhesive layer 5, the second adhesive layer 9, and the third adhesive layer 13 is preferably made of an adhesive α.

Examples of the adhesive α include a fluorine adhesive, silicone rubber, a silicone adhesive, and a polyimide adhesive.

Examples of the fluorine adhesive include fluororubber, and fluoroelastomer (such as PFA).

The fluorine content in the adhesive α is preferably up to 64 mass% and more preferably 57 to 60 mass%.

The fluorine content in the adhesive α is represented by a value obtained by the method according to JIS K 7217 (Analytical Method for Determining Gases Evolved from Burning Plastics) which includes: absorbing fluororesin combustion gas into an absorbing liquid and performing a quantitative analysis according to JIS K 0102 34.1.

The adhesive α is a fluorine adhesive having an unsaturated bond content of preferably 0.1 to 20% and more preferably 0.1 to 10%.

The unsaturated bond content in the adhesive α is calculated by the ratio between the accumulated amount at peaks (4.5 to 6.0 ppm) derived from alkyl chain unsaturated bond-related hydrogen and that at peaks derived from saturated bond-related hydrogen in a spectrum obtained by ¹H-NMR (solid-state NMR) measurement.

The adhesive α is a fluorine adhesive having a storage modulus at 25°C (E₁) of preferably 0.2 to 15 Mpa and more preferably 1 to 10 MPa.

An adhesive layer with a thickness of 400 um is used to measure the storage modulus with a dynamic thermoelasticity measuring device at a measurement frequency of 10 Hz while increasing the measurement temperature from 0°C to 120°C at 3°C/min, and a value obtained at 25°C is taken as the storage modulus at 25°C (E₁) of the adhesive α.

The adhesive α is a fluorine adhesive having a storage modulus at 70°C (E₂) of preferably 0.1 to 10 Mpa and more preferably 0.5 to 8 MPa.

An adhesive layer with a thickness of 400 um is used to measure the storage modulus with a dynamic thermoelasticity measuring device at a measurement frequency of 10 Hz while increasing the measurement temperature from 0°C to 120°C at 3°C/min, and a value obtained at 70°C is taken as the storage modulus at 70°C (E₂) of the adhesive α.

The adhesive α is a fluorine adhesive having a ratio of the storage modulus at 70°C (E₂) to the storage modulus at 25°C (E₁) (percentage: E₂/E₁ × 100) in the range of preferably 8 to 92% and more preferably 20 to 85%.

The inventors have found that, in a case where at least one selected from the group consisting of the first adhesive layer 5, the second adhesive layer 9 and the third adhesive layer 13 is made of a fluorine adhesive in which the ratio of the storage modulus at 70°C (E₂) to the storage modulus at 25°C (E₁) (percentage: E₂/E₁ × 100) is 8 to 92% (preferably 20 to 85%), when the heater of the invention is disposed on a curved surface of a member to be heated (e.g., a pipe) which has the curved surface, it is more likely to bend.

In the heater of the invention in which at least one selected from the group consisting of the first adhesive layer 5, the second adhesive layer 9, and the third adhesive layer 13 is made of the above-mentioned fluorine adhesive, energization of the heat generating layer lowers the modulus of elasticity of the fluorine adhesive due to heat emitted from the heat generating layer. When the heater of the invention is deformed at that state so as to be closely attached to the curved surface of the member to be heated, the fluorine adhesive is easily deformed along with its deformation. The inventors have found that, when the energization of the heat generating layer is then stopped and the temperature of the heater of the invention is reduced to around room temperature while keeping the state in which the heater of the invention is closely attached to the curved surface of the member to be heated, the modulus of elasticity of the fluorine adhesive is increased and the heater of the invention is therefore more likely to bend and, as a result, is easily disposed on the curved surface of the member to be heated (e.g., a pipe) which has the curved surface.

When the heater of the invention is disposed on a curved surface of a member to be heated (e.g., a pipe) which has the curved surface, if the heater of the invention is previously bent so as to fit with the curved surface, the workability of the heater of the invention on the curved surface of the member to be heated is increased. The inventors have found that, when at least one selected from the group consisting of the first adhesive layer 5, the second adhesive layer 9 and the third adhesive layer 13 is made of a fluorine adhesive in which the ratio of the storage modulus at 70°C (E₂) to the storage modulus at 25°C (E₁) (percentage: E₂/E₁ × 100) is 8 to 92% (preferably 20 to 85%), the heater of the invention is previously bent with ease so as to fit with the curved surface of the member to be heated.

An exemplary method of bending the heater of the invention before being disposed is a method which includes: putting in an oven a cylinder having a curved surface with approximately the same curvature as a member to be heated and the heater of the invention, heating them to about 110°C, wrapping the heater of the invention around the outer surface of the cylinder in the oven to bend it, then taking out the cylinder having the heater of the invention wrapped therearound from inside the oven, reducing the temperature to around room temperature, and thereafter detaching the heater of the invention from the cylinder.

The adhesive α is preferably a fluorine adhesive having a solubility obtained by subjecting it to a solvent solubility test in the range of 5 to 30 mass% and preferably 10 to 28 mass%.

At least one selected from the group consisting of the first adhesive layer 5, the second adhesive layer 9, and the third adhesive layer 13 is preferably made of such a fluorine adhesive.

Of these, the first adhesive layer 5 is preferably made of a fluorine adhesive having a solubility obtained by subjecting it to a solvent solubility test in the range of 5 to 30 mass% (preferably 10 to 28 mass%).

The solvent solubility test is a test which includes: putting 1,000 g of tetrahydrofuran (THF) into a 2 L plastic bottle, adjusting its temperature to 23°C, putting 1 to 50 g of a granular sample (adhesive α) with a diameter of 0.5 to 2.0 cm into the tetrahydrofuran being stirred at 600 rpm by a medium viscosity agitator using a Disper blade with a blade diameter of 40 mm as the stirrer blade, checking whether the total amount of the sample is dissolved after the passage of 24 hours, additionally putting 1 to 50 g of the sample (adhesive α) again if it is dissolved, and repeating the process for checking whether it is dissolved after the passage of 24 hours, thereby determining the maximum soluble amount (solubility).

The thickness of the first adhesive layer 5 is not limited and is preferably 5 to 50 um, and more preferably 20 to 30 um.

The thickness of the second adhesive layer 9 is not limited and is preferably 5 to 100 um, and more preferably 20 to 30 um.

The thickness of the third adhesive layer 13 is not limited and is preferably 5 to 100 um, and more preferably 20 to 30 um.

### <First Insulating Layer, Second Insulating Layer>

The first insulating layer 7 and the second insulating layer 15 will be described.

These may be of the same type or different types.

The main surfaces of the first insulating layer 7 are closely attached to the main surface of the first adhesive layer 5 and the main surface of the second adhesive layer 9, respectively. The first insulating layer 7 plays a role in electrically insulating the heat generating layer 11 and the high-strength/high insulation sheet 3 from each other.

The main surface of the second insulating layer 15 is closely attached to the main surface of the third adhesive layer 13. When the second insulating layer 15 has another layer on a main surface to which the third adhesive layer 13 is not attached, the second insulating layer 15 plays a role in electrically insulating the layer and the heat generating layer 11 from each other.

The first insulating layer 7 and the second insulating layer 15 preferably have thermal conductivity in addition to insulation properties.

The first insulating layer 7 and the second insulating layer 15 are preferably made of, for example, PET (polyethylene terephthalate), PI (polyimide), PP (polypropylene), PE (polyethylene), PEN (polyethylene naphthalate), TAG (triacetyl cellulose), or ceramic, because they have high insulation properties. Among others, the first insulating layer 7 and the second insulating layer 15 made of PI (polyimide) are preferred because of their excellent heat resistance and insulation properties.

The thickness (h₁) of the first insulating layer 7 is not limited and is preferably 25 to 75 um and more preferably 40 to 60 um.

The thickness of the second insulating layer 15 is not limited and is preferably 10 to 50 um, and more preferably 20 to 30 um.

There is no particular limitation on the shapes and sizes of the main surfaces of the first insulating layer 7 and the second insulating layer 15. However, the first insulating layer 7 and the second insulating layer 15 play a role in electrically insulating the heat generating layer 11 and other layers from each other and therefore the main surfaces of the first insulating layer 7 and the second insulating layer 15 are in general the same as or larger than those of the heat generating layer 11.

In the heater of the invention, the ratio (h₁/Hₜₒₜₐₗ) of the thickness (h₁) of the first insulating layer to the total thickness (Hₜₒₜₐₗ) of the high-strength/high-insulation sheet, first adhesive layer and first insulating layer as described above is 0.10 or more, preferably 0.15 or more, and more preferably 0.20 or more.

The inventors have found that, in such a case, the tensile (elongation) stress load can be reduced when the heater of the invention is disposed on a curved surface of a member to be heated (e.g., a pipe) which has the curved surface.

A sheet-shaped heater having the smallest possible thickness has heretofore been desired in terms of ease of placement on a curved surface of a pipe or the like, specifically ease of wrapping around the outer surface of the pipe, and ease of heat transfer. However, the inventors have found that there is concern that only reducing the thickness leads to increased tensile (elongation) stress load to cause changes in resistance value associated with elongation of the heating element. The inventors have found that the tensile (elongation) stress load can be reduced by increasing the thickness (h₁) of the first insulating layer instead of reducing it even if the total thickness of the sheet-shaped heater is reduced, specifically by adjusting the ratio (h₁/Hₜₒₜₐₗ) of the thickness (h₁) of the first insulating layer to the total thickness (Hₜₒₜₐₗ) of the high-strength/high-insulation sheet, the first adhesive layer and the first insulating layer to 0.10 or more.

### <Heat Generating Layer>

The heat generating layer 11 will be described.

The heat generating layer 11 is not limited as long as it has the shape of a sheet generating heat through energization.

The heat generating layer 11 may be made of, for example, metal foil, a metal mesh sheet, a metal fiber sheet, or a carbon sheet.

The material of the heat generating layer 11 is not particularly limited as long as it generates heat through energization. It is preferably stainless steel but may be copper (Cu), aluminum (Al), nickel (Ni), Nichrome, or carbon.

The heat generating layer 11 preferably has a thickness of 10 to 600 um and more preferably 20 to 150 um, and preferably has a thickness of about 30 um in terms of flexibility and strength.

The shape and size of each main surface of the heat generating layer 11 can be appropriately adjusted according to the shape and size of a member to be heated on which the sheet of the invention is to be disposed.

The heat generating layer 11 preferably has a resistance value of 10 to 800 Ω, and more preferably 80 to 200 Ω. Too low a resistance value may increase the temperature too much due to too much power. On the other hand, too high a resistance value may require time to increase the temperature due to too little power.

The resistance of the heat generating layer is represented by a value determined according to JIS K 7194.

The heat generating layer 11 is preferably primarily composed of metal fibers and more preferably only composed of metal fibers.

The term "primarily" means that the content is 70 mass% or more. In other words, the heat generating layer 75 preferably contains metal fibers in an amount of 70 mass% or more. The heat generating layer 75 contains metal fibers in an amount of more preferably 80 mass% or more, even more preferably 90 mass% or more, and still more preferably 95 mass% or more.

The metal fiber content in the heat generating layer 11 is determined by the following method:
A surface of the heat generating layer 11 is taken with a scanning electron microscope (SEM) at a magnification of 1,000X to obtain an SEM image; the area of metal fibers (except voids) within its field of view is determined using an image processor and is raised to the three-halves power to be converted to volume ratio, which is further multiplied by the specific gravity to determine the mass ratio, thereby calculating the metal fiber content.

The metal fibers are preferably those having a cross-sectional diameter in terms of equal-area circle equivalent diameter of 2 to 100 um (preferably 5 to 20 um) and a length of 2 to 20 mm.

The heat generating layer 11 is preferably made of a metal fiber sheet in which an infinite number of such metal fibers are intricately entangled with each other to be formed into a sheet shape. The metal fiber sheet may be only composed of metal fibers but may contain, in addition to the metal fibers, materials other than the metal fibers (for example, resin fibers serving as a binder) as long as they do not inhibit heat generation.

The metal fibers constituting the metal fiber sheet are in contact with each other to such an extent that energization is established. The metal fibers are preferably connected to each other at their points of contact. For example, the metal fibers preferably have a history including melting of parts of the metal fibers through sintering at a high temperature and its subsequent solidification, and are heat-fused to each other at their points of contact.

The metal fiber sheet is preferably an SUS fiber sheet because of its high heat resistance and chemical resistance. An example of the SUS fiber sheet is a stainless steel fiber sheet (e.g., Tommy Filec SS manufactured by Tomoegawa Co., Ltd.).

The metal fiber sheet preferably has a basis weight of 25 g/m² or more, and preferably 50 g/m² or more. The basis weight is preferably 1,000 g/m² or less, and more preferably 200 g/m² or less.

The basis weight is represented by a value determined according to JIS P 8124.

The metal fiber sheet preferably has a density of 1.0 to 10.0 g/cm³, and more preferably 1.4 to 2.0 g/cm³, and preferably has a density of about 1.7 g/cm³.

The density of the metal fiber sheet is represented by a value determined by Density (g/cm³) = Basis Weight (g/m²) / (Thickness (mm) × 1,000) according to JIS P 8118.

The metal fiber sheet can be manufactured by both a dry non-woven fabric manufacturing process and a wet papermaking process. When it is manufactured by the wet papermaking process, an infinite number of metallic fibers which have a cross-sectional diameter in terms of equal-area circle equivalent diameter of 2 to 100 um and a length of 2 to 20 mm are stirred in a dispersion medium (water, an organic solvent or the like) and an organic flocculant is then added. The mixture is formed into a sheet shape using a rectangular hand papermaking device (manufactured by Toyo Seiki Seisaku-sho, Ltd.), and a dry sheet with a basis weight of 50 to 1,100 g/m² is obtained using a ferrotype drying device. Then, the dry sheet is burnt at 400 to 1,300°C to obtain the metal fiber sheet. In principle, no organic flocculant preferably remains within the metal fiber sheet.

### <Thermal Diffusion Layer>

As described above, the heater 1 of the invention includes the high-strength/high-insulation sheet 3, the first adhesive layer 5, the first insulating layer 7, the second adhesive layer 9, the heat generating layer 11, and (preferably further the third adhesive layer 13, and the second insulating layer 15) which are laminated in this order, and the main surfaces of the respective adjoining layers are closely attached to each other.

The high-strength/high-insulation sheet 3 may further have a thermal diffusion layer on its main surface on a side on which the first adhesive layer 5 is not formed.

Having the thermal diffusion layer makes it possible to diffuse heat generated by the heat generating layer to heat a member to be heated more uniformly.

Although there is no particular limitation on the method of adhering the thermal diffusion layer to the main surface of the high-strength/high-insulation sheet 3 on the side on which the first adhesive layer 5 is not formed, the thermal diffusion layer is preferably adhered thereto using the above-mentioned adhesive α.

The thermal conductivity of the thermal diffusion layer in its planar direction is preferably higher than that of the heat generation layer in its planar direction, because thermal diffusion capacity is further enhanced.

The thermal conductivity of the thermal diffusion layer is measured at ordinary temperatures by known measurement methods such as laser flash thermal diffusivity measurement (for example, LFA Series manufactured by NETZSCH) and AC thermal diffusivity measurement (for example, LaserPit Series manufactured by ADVANCE RIKO Inc.).

The thermal diffusion layer is preferably made of carbon, metals such as aluminum, copper, zinc, lead, gold and silver, and ceramics such as alumina and aluminum nitride.

The thermal diffusion layer is preferably made of a carbon film because it is excellent in flexibility and also has high thermal conductivity in a direction in which it extends.

The thickness of the thermal diffusion layer is not particularly limited, and is preferably 5 to 300 um, more preferably 15 to 200 um, and even more preferably about 100 um.

The total thickness of the sheet of the invention is not limited, and is preferably 200 to 800 um, more preferably 200 to 500 um, and even more preferably 300 to 450 um.

### EXAMPLES

The present invention will be described by way of examples. The present invention should not be construed as being limited to the embodiments in the examples to be described below.

### [Experiment 1]

### <Example 1>

A sheet-shaped heater of the embodiment shown in FIG. 1 was prepared.

The details of each layer are as follows:
* High-strength/high-insulation sheet: PTFE cloth (FGF-500-8 manufactured by Chukoh Chemical Industries, Ltd.) with a thickness of 170 um;
* First adhesive layer: layer made of a fluorine adhesive with a thickness of 25 um;
* First insulating layer: polyimide coating with a thickness of 50 um;
* Second adhesive layer: the same as the first adhesive layer (with a thickness of 25 um);
* Heat generating layer: stainless steel paper (Tommy Filec SS manufactured by Tomoegawa Co., Ltd.) with a thickness of 30 um;
* Third adhesive layer: the same as the first and second adhesive layers (with a thickness of 25 um);
* Second insulating layer: the same as the first insulating layer (with a thickness of 25 um).

The thickness of each layer has a value obtained by the measurement using the above-mentioned method.

The fluorine adhesive used to form the first, second and third adhesive layers is a fluorine adhesive of which the solubility obtained by subjecting it to the above-mentioned solvent solubility test is in the range of 5 to 30 mass%. In the solvent solubility test, a high power general purpose agitator BLH1200 manufactured by Shinto Scientific Co., Ltd. was used as the medium viscosity agitator.

The fluorine content in the fluorine adhesive as measured by the above-mentioned method was in the range of 57 to 60 mass%.

The unsaturated bond content in the fluorine adhesive as measured by the above-mentioned method was in the range of 0.1 to 10 %.

The storage modulus at 25°C (E₁) of the fluorine adhesive as measured by the above-mentioned method was 5.58 MPa.

Further, the storage modulus at 70°C (E₂) of the fluorine adhesive as measured by the above-mentioned method was 3 MPa.

The strain (gauge value) was measured for the sheet-shaped heater obtained in Example 1.

The measurement method of the strain (gauge value) is as follows:
A strain gauge of a strain meter (FLAB-1-11-3LJCT manufactured by Tokyo Measuring Instruments Laboratory Co., Ltd.) was fixed with an adhesive on the upper side of the heat generating layer so as to lie in the same direction as the wrapping direction, and then the adhesive layer 13 and the third insulating layer 15 are laminated thereon. The state immediately after the lamination is defined as strain zero and the strain gauge value at the time of wrapping around a cylinder with a diameter of 27 mm is read.

The results are shown in Table 1. The elongation (%) calculated as a value of one ten-thousandth of the gauge value was also shown in Table 1.

### <Example 2>

Exactly the same experiment as in Example 1 was performed except that the thickness of the first insulating layer was changed to 25 um.

The results are shown in Table 1.

### <Example 3>

Exactly the same experiment as in Example 1 was performed except that PTFE cloth (FGF-500-10 manufactured by Chukoh Chemical Industries, Ltd.) with a thickness of 250 um was used as the high-strength/high-insulation sheet.

The results are shown in Table 1.

### <Example 4>

Exactly the same experiment as in Example 1 was performed except that the thickness of the first adhesive layer was changed to 50 um.

The results are shown in Table 1.

### <Example 5>

The sheet-shaped heater was formed by adding a layer made of a fluorine adhesive (thickness: 25 um) and a polyimide coating (thickness: 50 um) between the first insulating layer and the second adhesive layer in Example 1. Specifically, the heater had a configuration in which the high-strength/high-insulation sheet, the first adhesive layer, the first insulating layer, the layer made of the fluorine adhesive (thickness: 25 um), the polyimide coating (thickness: 50um), the second adhesive layer, the heat generating layer, the third adhesive layer, and the second insulating layer were laminated in this order.

Then, exactly the same experiment as in Example 1 was performed except this point.

The results are shown in Table 1.

### <Example 6>

Exactly the same experiment as in Example 1 was performed except that PTFE cloth (FGF-500-2 manufactured by Chukoh Chemical Industries, Ltd.) with a thickness of 50 um was used as the high-strength/high-insulation sheet and that the thickness of the first insulating layer was changed to 25 um.

The results are shown in Table 1.

### <Example 7>

Exactly the same experiment as in Example 1 was performed except that PTFE cloth (FGF-500-6 manufactured by Chukoh Chemical Industries, Ltd.) with a thickness of 125 um was used as the high-strength/high-insulation sheet.

### <Example 8>

Exactly the same experiment as in Example 1 was performed except that the thickness of the first adhesive layer was changed to 20 um.

The results are shown in Table 1.

### <Example 9>

Exactly the same experiment as in Example 1 was performed except that the thickness of the first insulating layer was changed to 75 um.

The results are shown in Table 1.

### <Comparative Example 1>

Exactly the same experiment as in Example 1 was performed except that PTFE cloth (FGF-500-10 manufactured by Chukoh Chemical Industries, Ltd.) with a thickness of 250 um was used as the high-strength/high-insulation sheet and that the thickness of the first insulating layer was changed to 25 um.

The results are shown in Table 1.

### <Comparative Example 2>

Exactly the same experiment as in Example 1 was performed except that PTFE cloth (FGF-500-10 manufactured by Chukoh Chemical Industries, Ltd.) with a thickness of 250 um was used as the high-strength/high-insulation sheet and that the thicknesses of the first adhesive layer and the first insulating layer were changed to 50 um and 25 um, respectively.

The results are shown in Table 1.

### <Comparative Example 3>

An aluminum layer with a thickness of 30 um was attached with an adhesive to a main surface of the high-strength/high-insulation sheet of the sheet-shaped heater in Comparative Example 1 (the main surface to which the first adhesive layer is not attached). The adhesive used was the same type as that used to form the first adhesive layer, and an adhesive layer X made of the adhesive used to attach the aluminum layer had a thickness of 25 um.

Then, exactly the same experiment as in Comparative Example 1 was performed except this point.

The results are shown in Table 1.

**[Table 1]**

| | **Aluminum Layer+ Adhesive Layer X** | **High-strengh/ High-insulation Sheet** | **First Adhesive layer** | **First Insulating Layer** | **Second Adhesive Layer** | **Heat Generating Layer** | **Third Adhesive Layer** | **Second Insulating Layer** | **Ratio (h₁/Hₜₒₜₐₗ) of Thickness (h₁) of First Insulating Layer to Total Thickness (Htotal) of High-strength/High-insulation Sheet, First Adhesive Layer and First Insulating Layer** | **Total Thickness (*µ*m)** | **Gauge Value** | **Elongation %** |
|---|---|---|---|---|---|---|---|---|---|---|---|---|
| | **(Thickness: µm)** | | | | | | | | | | | |
| **EX 1** | **-** | **170** | **25** | **50** | **25** | **30** | **25** | **25** | **0.20** | **350** | **3102** | **0.31%** |
| **EX 2** | **-** | **170** | **25** | **25** | **25** | **30** | **25** | **25** | **0.11** | **325** | **3750** | **0.38%** |
| **EX 3** | **-** | **250** | **25** | **50** | **25** | **30** | **25** | **25** | **0.15** | **430** | **3650** | **0.37%** |
| **EX 4** | **-** | **170** | **50** | **50** | **25** | **30** | **25** | **25** | **0.19** | **375** | **3700** | **0.37%** |
| **EX 5** | **-** | **170** | **25** | **50** | **25** | **30** | **25** | **25** | **0.20** | **350** | **3100** | **0.31%** |
| **EX 6** | **-** | **50** | **25** | **25** | **25** | **30** | **25** | **25** | **0.25** | **205** | **2600** | **0.26%** |
| **EX 7** | **-** | **125** | **25** | **50** | **25** | **30** | **25** | **25** | **0.25** | **305** | **2850** | **0.29%** |
| **EX 8** | **-** | **170** | **20** | **50** | **25** | **30** | **25** | **25** | **0.21** | **345** | **3000** | **0.30%** |
| **EX 9** | **-** | **170** | **25** | **75** | **25** | **30** | **25** | **25** | **0.28** | **375** | **2950** | **0.30%** |
| **CE 1** | **-** | **250** | **25** | **25** | **25** | **30** | **25** | **25** | **0.08** | **405** | **3900** | **0.39%** |
| **CE 2** | **-** | **250** | **50** | **25** | **25** | **30** | **25** | **25** | **0.08** | **430** | **4500** | **0.45%** |
| **CE 3** | **30/25** | **250** | **25** | **25** | **25** | **30** | **25** | **25** | **0.08** | **460** | **4500** | **0.45%** |

| | | | | | | | | | | | | |
|---|---|---|---|---|---|---|---|---|---|---|---|---|
| EX: Example CE: Comparative Example | | | | | | | | | | | | |

As shown in Table 1, it could be confirmed that the elongation % was preferably reduced when the ratio (h₁/Hₜₒₜₐₗ) of the thickness (h₁) of the first insulating layer to the total thickness (Hₜₒₜₐₗ) of the high-strength/high-insulation sheet, first adhesive layer and first insulating layer was 0.10 or more.

On the other hand, in each of Comparative Examples 1 to 3 in which this value was less than 0.1, the elongation % was increased.

### [Experiment 2]

### <Example 10>

A fluorine adhesive in which the ratio of the storage modulus at 70°C (E₂) to the storage modulus at 25°C (E₁) (percentage: E₂/E₁ × 100) was 50% was used to form the first adhesive layer, the second adhesive layer and the third adhesive layer in the above-mentioned Example 1. The thickness was set to 25 um, which was the same as in Example 1. Apart from that, Example 1 was repeated for the high-strength/high-insulation sheet, the first insulating layer, the heat generating layer, and the second insulating layer, thus forming a sheet-shaped heater.

Then, a test in which the sheet-shaped heater as described above was wrapped around a stainless steel pipe with an external diameter of 42.7 mm and an internal diameter of 35.7 mm.

The procedure will be specifically described below.

First of all, the above-mentioned stainless steel pipe and sheet-shaped heater were put in an oven adjusted to an internal temperature of 110°C and heated for 30 minutes.

Next, while the stainless steel pipe and sheet-shaped heater were heated in the oven, the latter was wrapped around the former, and they were kept in that state for 10 minutes.

Next, the stainless steel pipe around which the sheet-shaped heater was wrapped was taken out of the oven while being kept in that state, and was allowed to cool to room temperature in a room.

Next, the sheet-shaped heater was detached from the stainless steel pipe and the internal diameter of the sheet-shaped heater which constituted the shape of a cylinder or a part thereof was measured.

Next, the internal diameter was compared with the external diameter (42.7 mm) of the stainless steel pipe. Then, when the internal diameter of the deformed sheet-shaped heater was larger by at least 10 mm than the external diameter of the stainless steel pipe, the sheet-shaped heater was determined not to have bendability (poor in Table 2), whereas when the difference therebetween was less than 10 mm, the sheet-shaped heater was determined to have bendability (good in Table 2).

The result is shown in Table 2.

### <Example 11>

In Example 10, the fluorine adhesive in which the ratio of the storage modulus at 70°C (E₂) to the storage modulus at 25°C (E₁) (percentage: E₂/E₁ × 100) was 50% was used to form the first adhesive layer, the second adhesive layer and the third adhesive layer. In Example 11, however, a fluorine adhesive in which the ratio of the storage modulus at 70°C (E₂) to the storage modulus at 25°C (E₁) (percentage: E₂/E₁ × 100) was 70% was used to form the first adhesive layer, the second adhesive layer and the third adhesive layer.

Apart from that, the procedure of Example 10 was repeated to form a sheet-shaped heater and the same test was performed.

The result is shown in Table 2.

### <Comparative Example 4>

In Example 10, the fluorine adhesive in which the ratio of the storage modulus at 70°C (E₂) to the storage modulus at 25°C (E₁) (percentage: E₂/E₁ × 100) was 50% was used to form the first adhesive layer, the second adhesive layer and the third adhesive layer. In Comparative Example 4, however, a paraffin adhesive in which the ratio of the storage modulus at 70°C (E₂) to the storage modulus at 25°C (E₁) (percentage: E₂/E₁ × 100) was 5% was used to form the first adhesive layer, the second adhesive layer and the third adhesive layer.

Apart from that, the procedure of Example 10 was repeated to form a sheet-shaped heater and the same test was performed.

The result is shown in Table 2.

### <Comparative Example 5>

In Example 10, the fluorine adhesive in which the ratio of the storage modulus at 70°C (E₂) to the storage modulus at 25°C (E₁) (percentage: E₂/E₁ × 100) was 50% was used to form the first adhesive layer, the second adhesive layer and the third adhesive layer. In Comparative Example 4, however, a polyimide adhesive in which the ratio of the storage modulus at 70°C (E₂) to the storage modulus at 25°C (E₁) (percentage: E₂/E₁ × 100) was 100% was used to form the first adhesive layer, the second adhesive layer and the third adhesive layer.

Apart from that, the procedure of Example 10 was repeated to form a sheet-shaped heater and the same test was performed.

The result is shown in Table 2.

**[Table 2]**

| | **E₂/E₁ × 100** | **Bendability** |
|---|---|---|
| **Example 10** | **50** | **Good** |
| **Example 11** | **70** | **Good** |
| **Comparative Example 4** | **5** | **Poor** |
| **Comparative Example 5** | **100** | **Poor** |

The sheet-shaped heaters obtained in Examples 10 and 11 could have good bendability.

In contrast, the sheet-shaped heaters in Comparative Examples 4 and 5 could not have good bendability.

This application claims priority based on Japanese Patent Application No. 2022-056330 filed on March 30, 2022, the entire disclosure of which is incorporated herein by reference.

### REFERENCE SIGNS LIST

- 1: heater of the invention
- 3: high-strength/high-insulation sheet
- 5: first adhesive layer
- 7: first insulating layer
- 9: second adhesive layer
- 11: heat generating layer
- 13: third adhesive layer
- 15: second insulating layer

## Claims

1. A sheet-shaped heater comprising:
a high-strength/high-insulation sheet obtained by impregnating reinforced fibers with fluororesin;
a first adhesive layer;
a first insulating layer;
a second adhesive layer; and
a heat generating layer,
these layers being laminated in this order,
wherein:
a main surface of the high-strength/high-insulation sheet and a main surface of the first adhesive layer are closely attached to each other,
a main surface of the first adhesive layer and a main surface of the first insulating layer are closely attached to each other,
a main surface of the second adhesive layer and a main surface of the heat generating layer are closely attached to each other, and
a ratio (h₁/Hₜₒₜₐₗ) of a thickness (h₁) of the first insulating layer to a total thickness (Hₜₒₜₐₗ) of the high-strength/high-insulation sheet, the first adhesive layer and the first insulating layer is 0.10 or more.

2. The sheet-shaped heater according to claim 1, wherein the total thickness is 200 to 800 um.

3. The sheet-shaped heater according to claim 1 or 2, wherein:
the high-strength/high-insulation sheet has a thickness of 100 to 300 um, and
the first adhesive layer has a thickness of 5 to 50 um.

4. The sheet-shaped heater according to any one of claims 1 to 3, wherein the heat generating layer is made of a metal fiber sheet.

5. The sheet-shaped heater according to any one of claims 1 to 4, wherein:
the first adhesive layer and/or the second adhesive layer is made of a fluorine adhesive in which a ratio of storage modulus at 70°C (E₂) to storage modulus at 25°C (E₁) (percentage: E₂/E₁ × 100) is 8 to 92%.

6. The sheet-shaped heater according to any one of claims 1 to 5, wherein:
the first adhesive layer is made of a fluorine adhesive having a solubility of 5 to 30 mass%, the solubility being obtained by performing a solvent solubility test which includes: putting 1,000 g of tetrahydrofuran (THF) into a 2 L plastic bottle, adjusting its temperature to 23°C, putting 1 to 50 g of a granular sample with a diameter of 0.5 to 2.0 cm into the tetrahydrofuran being stirred at 600 rpm by a medium viscosity agitator using a Disper blade with a blade diameter of 40 mm as a stirrer blade, checking whether a total amount of the sample is dissolved after passage of 24 hours, additionally putting 1 to 50 g of the sample again if it is dissolved, and repeating a process for checking whether it is dissolved after the passage of 24 hours, thereby determining a maximum soluble amount (solubility) .
